# EUROPEAN PATENT APPLICATION

(11) **EP 0 747 847 A2**
(43) Date of publication of application: **11.12.1996**
(21) Application number: 96108897.8
(22) Date of filing: 04.06.1996
(51) Int. Cl.: G06F 17/60

(54) **Method and apparatus for representing knowledge about entities**

(30) Priority: 07.06.1995 US 472414
(71) Applicant: International Business Machines Corporation, Armonk, N.Y. 10504 (US)
(72) Inventor: Fohn, Steffen Michael, Mohegan Lake, NY 10547 (US); Greef, Arthur Reginald, Yorktown Heights, NY 10598 (US); Willenborg, Donald C., Ridgewood, NJ 07450 (US)
(74) Representative: Schäfer, Wolfgang, Dipl.-Ing.

(57) **Abstract**

A method and apparatus for representing knowledge about entities is disclosed. A functional taxonomy is defined which includes at least one entity and at least one property associated with each entity. A structural taxonomy is also defined which includes at least one entity and at least one property associated with each entity, wherein at least one structural taxonomy entity is defined in terms of at least one functional taxonomy entity. At least a portion of the functional taxonomy and at least a portion of the structural taxonomy is stored within a memory. The invention relies upon an object-centered constraint approach, which uniquely incorporates object-oriented principles together with constraint-satisfaction techniques. A key feature of the present invention is the ability to represent knowledge about items which exist in fact ("existing items") and items which are capable of existing ("feasible items").

## Description

### BACKGROUND OF THE INVENTION

### 1. Field of the Invention

The present invention relates to a method and apparatus for representing knowledge about entities. More particularly, the present invention relates to a method and apparatus for representing knowledge about goods and services in connection with buying and selling goods and services via computer.

### 2. Description of Related Art

Commerce is the economic engine of society. For thousands of years and throughout the world, buyers and sellers have met one another in the marketplace to buy and sell goods and services. No doubt they will continue to do so for thousands of years to come.

Historically, technological advances profoundly impact the way in which buyers and sellers interact. Innovations in transportation and communication, for example, expand the marketplace. Just as masted ships and quill-written correspondence once circumnavigated the globe to bring European and Far Eastern trading partners together, planes and electronic correspondence now do the same. One promise of the so-called "information superhighway" is the creation of a global village or marketplace, where buyers and sellers worldwide can instantly conduct business through a vast array of computer networks.

Existing systems provide an inkling of on-line buying and selling. PRODIGY, COMPUSERVE, and AMERICA ONLINE, for example, each offer subscribers (i.e., potential buyers) the ability to connect to those on-line services via a personal computer (equipped with a modem) and electronically view product descriptions of offerings from a variety of sellers. For convenience, as used herein, "sellers" includes both manufacturers and distributors, "buyers" includes both distributors and consumers, and "products" includes both goods and services. After viewing the available products, the buyer may then electronically order a product from the seller. The seller then provides the ordered product to the buyer. Importantly, sellers are sometimes buyers and vice versa (e.g., a manufacturer may procure components for a product from one or more suppliers, or, similarly, a distributor may procure products for an integrated offering from one or more manufacturers).

Another existing system is the IBM Electronic Purchasing System, which is a catalog-based, on-line shopping, multimedia system developed by IBM Corporation. The system addresses the entire cycle of a buying decision, including product research, comparison shopping, purchase request, approval tracking, order placement, receipt confirmation, and billing. The IBM Electronic Purchasing System automates many of the administrative functions associated with order handling, such as approval and status tracking. As a result, cost is reduced, orders are more frequently correct when first placed, and orders are released to the seller without the need for manual administrative support.

The IBM Electronic Purchasing System includes three components: Electronic Catalog; Approval and Status Tracking; and Order Manager. The Electronic Catalog contains product information. Buyers make purchase requests through the catalog, and product specifications, prices and availability are electronically updated. Buyers can compare product features of similar items while browsing the catalog, build a purchase request, change a request, check status, and cancel a request. With respect to the latter two components of the IBM Electronic Purchasing System, the Approval and Status Tracking component handles administrative matters related to obtaining proper approval for, and tracking the status of, a particular purchase request, and the Order Manager component monitors the flow of purchase requests, coordinates billing activities, and manages other aspects of the system.

In any on-line system for procuring products, the manner in which a product is described on the system ("product description") is critical. A seller describes, entices, and "sells" a product to a buyer through the product description. A buyer, on the other hand, evaluates, assesses, configures, and "buys" a product, in large part, on the basis of the product description. The situation is similar to an "off-line" sales transaction between a buyer and a seller through a printed catalog. The seller describes product attributes such as price, type, color, features, etc. in words and pictures. The buyer then evaluates the product on the basis of the words and pictures contained in the catalog.

A seller who self-publishes a printed product catalog has a great deal of flexibility concerning the information content and layout of product descriptions. The situation is very different for a seller whose product descriptions are contained within a printed catalog together with other sellers' product descriptions. For a variety of reasons, it is advantageous for a publisher of a printed catalog containing multiple sellers' products to collect product description information from sellers in a uniform manner. One reason is that it eases the administrative burden of collecting the data. Another reason is that the collected information can then be presented to the buyer in a variety of informative ways. Collection and reconciliation of multiple sellers' product descriptions is a challenge in a printed catalog setting, and an extremely difficult problem with respect to on-line systems for procuring products.

The importance of the product description in an on-line system is not limited to the information visually displayed or communicated to the buyer. The data which makes up a product description must be carefully structured and organized in order for a computer to perform efficient operations on the data residing in memory. As used herein, "data" means a representation of facts, concepts or instructions in a formalized manner suitable for communication, interpretation, or processing by human or automatic means. Also, as used herein, "computer" means a device capable of performing the functions of a Turing Machine, including a microcomputer, minicomputer, or mainframe computer. A Turing Machine is a well-known computer science concept and is explained in Encyclopedia of Computer Science, Ed. Anthony Ralston, ISBN 0-88405-321-0 ("Ralston"), which is specifically incorporated herein by reference. "Memory" means one or more devices for storing data for use by a computer, including electronic, magnetic, and electromagnetic memory.

Various data representations are used in connection with digital computers in order to manipulate information. Different representations are used depending upon the objective. For example, some representations are better suited for performing arithmetic operations (e.g., adding, subtracting, multiplying), while others may be particularly suited for text processing (e.g., word processing). Still other representations may be better suited for knowledge representation. The choice of representation is typically of no direct concern to an end user of a computer or computer program, however it is nevertheless important since it may profoundly affect the efficiency of a system. Data representations and operations thereon are discussed in The Art of Computer Programming, D.E. Knuth, vols. 1-3, Addison-Wesley, ISBN 0-201- 03809-9, -03802-1, and -03803-X, respectively ("Knuth"), An Introduction to Database Systems, C.J. Date, vols 1-2, Addison- Wesley, ISBN 0-201-14452-2 and -14474-3, respectively ("Date"), and Object-Oriented Analysis and Design with Applications, G. Booch, Benjamin/Cummings, ISBN 0-8053-5340-2 ("Booch"), each of which is specifically incorporated herein by reference.

Current electronic product-information based applications are incapable of sharing and using a wide variety of complex-product descriptions that are collated from a variety of sellers, each of whom describes their respective products using varying terminology and differing electronic data representations.

Various attempts have been made to address aspects of the problem. The following literature list is illustrative: U.S. Pat. No. 4,591,983; Bowen, J., "Automated Configuration Using Functional Reasoning", Artificial Intelligence and its Applications, Cohn, A.G. and Thomas, J.R. (eds.), pp. 79-106 (1986); Frayman, F. and Mittal, S., "COSSACK: A Constraints-Based Expert System for Configuration Tasks", Knowledge-Based Expert Systems in Engineering: Planning and Design, Sriram, D. and Adey, R.A. (eds.), pp. 143-166 (1987); Freeman, P. and Newell, A., "A Model for Functional Reasoning in Design", Proceedings of the International Joint Conference on AI, pp. 621-640 (1971); Kramer, B.M., "Knowledge-based Configuration of Computer Systems using Hierarchical Partial Choice", Proceedings of the IEEE International Conference on Tools for AI, San Jose, CA, pp. 368-375 (1991); Mittal, S., Dym, C.L., and Morjaria, M., "PRIDE: An Expert System for the Design of Paper Handling Systems", Applications of Knowledge-Based Systems to Engineering Analysis and Design, Dym C.L. (ed.), ASME, New York, pp. 99-116 (1985); and Mittal, S. and Frayman, F., "Towards a generic model of configuration tasks", Proceedings of the International Joint Conference on AI, pp. 1395- 1401 (1989).

These known approaches are disadvantageous for a number of reasons. First, they do not provide a mechanism for uniformly capturing multi-product information in a multi-seller context. Next, they cannot easily integrate different characteristics of product information such as functions, items, connections, resources (both spatial and electrical), and abstractions created by disparate sources (e.g., different manufacturers) into a more complete product description. Further, these approaches do not provide a mechanism for the seller to construct a structure of product descriptions, distinct from the functions of its products, that represent how they sell their products. The seller is also unable to customize and maintain that underlying structure. Also, these approaches fail to provide the underpinnings for integrating automated tasks such as intelligent catalog browsing, product configuration selection, validation and synthesis, product information research, and manufacturing work description generation.

### SUMMARY OF THE INVENTION

The present invention overcomes the disadvantages and limitations of the related art by providing a method and apparatus for representing knowledge about entities. A functional taxonomy is defined which includes at least one entity and at least one property associated with each entity. A structural taxonomy is also defined which includes at least one entity and at least one property associated with each entity, wherein at least one structural taxonomy entity is defined in terms of at least one functional taxonomy entity. At least a portion of the functional taxonomy and at least a portion of the structural taxonomy is stored within a memory for access by a computer. The invention relies upon an object-centered constraint approach, which uniquely incorporates object-oriented principles together with constraint-satisfaction techniques. A key feature of the present invention is the ability to integrate the representation of knowledge about items which exist in fact ("existing items") and items which are capable of existing ("feasible items").

The invented knowledge representation can be interchanged via networks to facilitate product information reuse in a product information supply chain. For example, a manufacturer can interchange its product descriptions with a distributor that then adds their part number and price and interchanges the information with a reseller. The reseller adds their part number and price in turn and interchanges the information with a catalog collator. This information is then used in an electronic catalog.

An advantage of the invented knowledge representation is that multiple sellers may describe their respective products in a uniform manner which can be customized, integrated, interchanged, and reused in various contexts (such as by another seller in connection with its product offering).

Yet another advantage of the invented knowledge representation is that it simplifies intelligent catalog browsing, product configuration selection, validation and synthesis, product information research, and product manufacture.

Another advantage of the invented knowledge representation is that is simplifies the maintenance of functional-dependency information.

Yet another advantage of the invented knowledge representation is that it is well suited for implementation in an object-centered knowledge base management system.

Another advantage of the invented knowledge representation is that it easily integrates different characteristics of product information such as functions, items, connections, resources (both spatial and electrical), and abstractions created by disparate sources into a more complete product description.

Another advantage of the invented knowledge representation is the simultaneous representation of complex data and performance of nested operations.

Yet another advantage of the invented knowledge representation is that it provides a mechanism for a seller to construct the underlying structure of its product descriptions and to customize and maintain that underlying structure.

Another advantage of the invented knowledge representation is that knowledge thus represented is understandable, maintainable, reusable, and more likely to be correct.

Still another advantage is that the invented knowledge representation may be specified using a succinct "language" to accomplish the foregoing advantages.

Another advantage is that the invented knowledge representation can be reworked into other information presentation formats such as paper catalogs and other on-line catalogs such as those found on the Internet.

The foregoing and other advantages of the present invention will be apparent to those skilled in the art of information handling technology in view of the accompanying drawings, description of the invention, and appended claims.

### BRIEF DESCRIPTION OF THE DRAWINGS

FIG. 1 is a is a block diagram of a computer system in which the invented knowledge representation method and apparatus may be employed.

FIG. 2 is a diagram of a specialization/generalization hierarchical classification system ("taxonomy") illustrated as an inverted tree having a root node, terminal nodes, and intervening nodes.

FIG. 3 is a diagram of an functional taxonomy illustrating a Function concept decomposed into Component, Extra, Resource, and Connection concepts.

FIG. 4 is a diagram of a further decomposition of the Component concept of FIG. 3.

FIG. 5 is a diagram of a further decomposition of the Extra concept of FIG. 3.

FIG. 6 is a diagram of a further decomposition of the Resource concept of FIG. 3.

FIG. 7 is a diagram of a further decomposition of the Connection concept of FIG. 3.

FIG. 8 is a diagram of a structural taxonomy illustrating an Item concept decomposed into various concepts, including a Vehicle concept.

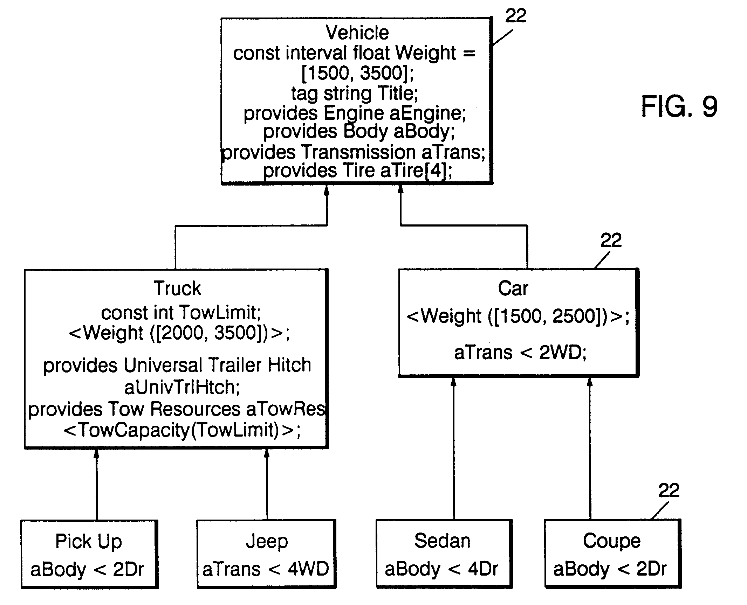

FIG. 9 is a diagram of a further decomposition of the Vehicle concept of FIG. 8.

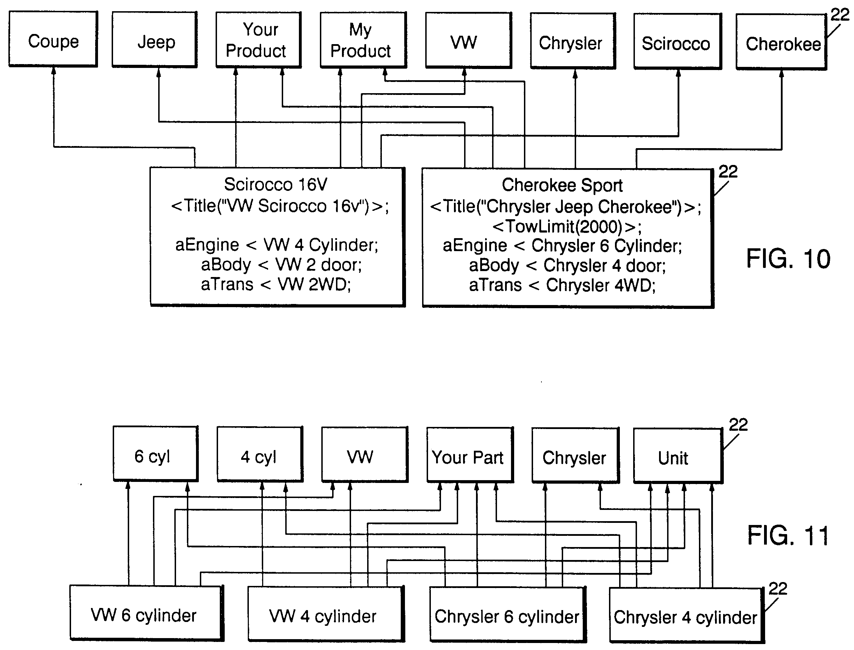

FIG. 10 is a diagram of relationships between Vehicle concepts and particular concepts within the structural taxonomy depicted in FIG. 8.

FIG. 11 is a diagram of the relationships between Engine concepts and particular concepts within both the functional taxonomy depicted in FIG. 4 and the structural taxonomy depicted in FIG. 8.

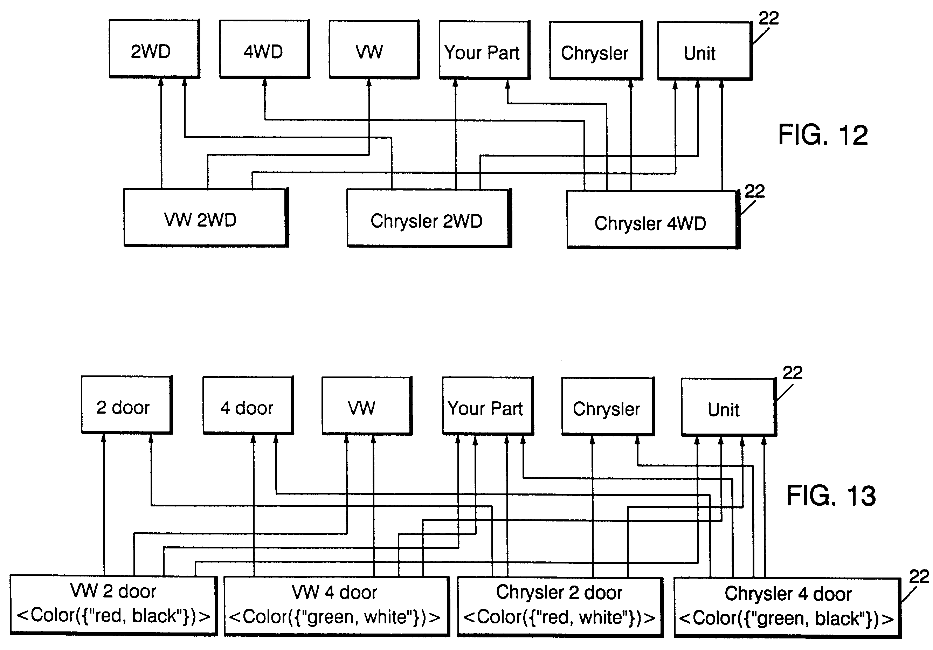

FIG. 12 is a diagram of the relationships between Transmission concepts and particular concepts within both the functional taxonomy depicted in FIG. 4 and the structural taxonomy depicted in FIG. 8.

FIG. 13 is a diagram of the relationships between Body concepts and particular concepts within both the functional taxonomy depicted in FIG. 4 and the structural taxonomy depicted in FIG. 8.

FIG. 14 is a diagram of the relationships between Trailer and Trailer-Hitch concepts and particular concepts within both the functional taxonomy depicted in FIG. 5 and the structural taxonomy depicted in FIG. 8.

FIG. 15 is a diagram of the relationships between Bike Rack concepts and particular concepts within both the functional taxonomy depicted in FIG. 5 and the structural taxonomy depicted in FIG. 8.

FIG. 16 is a diagram of a taxonomy illustrating a Compatible concept decomposed into Jeep Compatible and Coupe Compatible concepts.

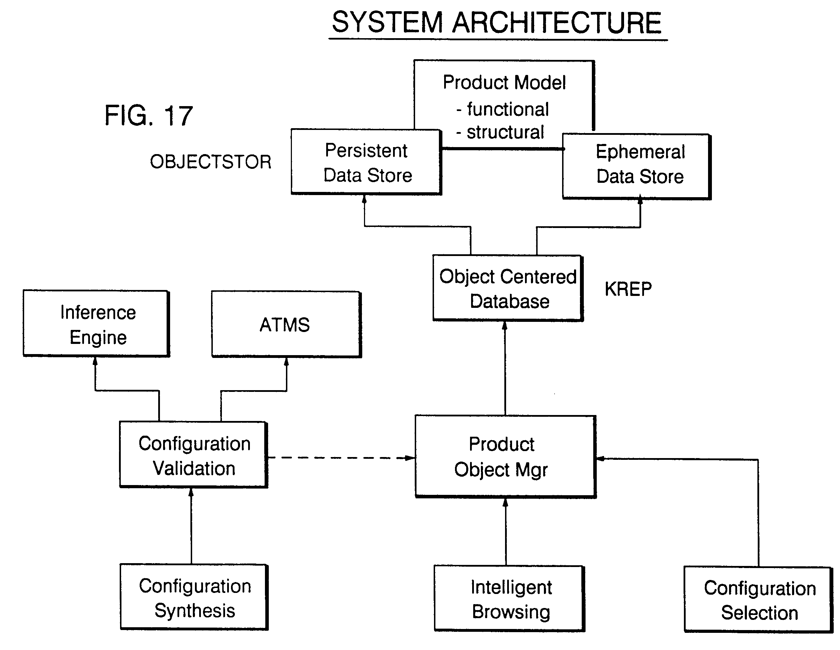

FIG. 17 is a diagram of the overall system architecture.

FIG. 18 is a diagram of a portion of FIG. 1.

### DESCRIPTION OF THE PREFERRED EMBODIMENTS

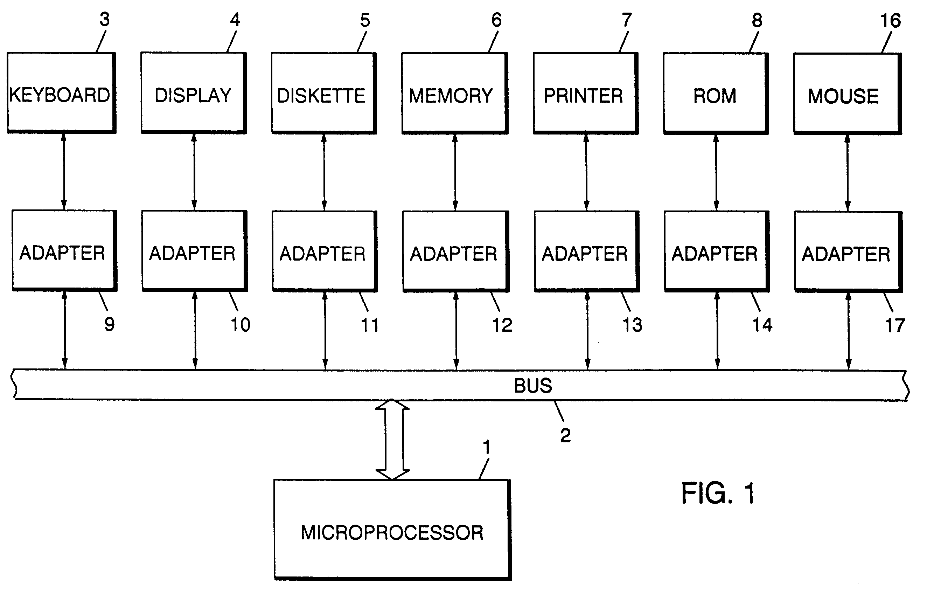

Referring now to FIG. 1, and for the purpose of describing the present invention in the context of a particular embodiment, a typical personal computer architecture is shown, such as the configuration used in the IBM Personal Computer or the IBM PS/2® computer. The present invention may also be used in other digital computer architectures, such as mini-computer and mainframe computer environments, and in local area and wide area computer networks.

The focal point of the preferred personal computer architecture comprises a microprocessor 1 which may, for example, be an INTEL 8088, 386, 486, or similar microprocessor. The microprocessor 1 is connected to a bus 2 which comprises a set of data lines, a set of address lines and a set of control lines. A plurality of I/O devices or memory or storage devices 3-8 and 16 are connected to the bus 2 through separate adapters 9-14 and 17, respectively. For example, the display 4 may be the IBM Personal Computer Color Display and the adapter 10 may, accordingly, be the IBM Color/Graphics Adapter. The other devices 3 and 5-8 and adapters 9 and 11-14 are either included as part of the personal computer or are available as plug-in options from the IBM Corporation.

The random access memory (RAM) 6 and the read-only memory (ROM) 8 and their corresponding adapters 12 and 14 are included as standard equipment in a personal computer, although additional random access memory to supplement memory 6 may be added via a plug-in memory expansion option.

Within the ROM 8 are stored a plurality of instructions, known as the basic input/output operating system, or BIOS, for execution by the microprocessor 1. The BIOS controls the fundamental operations of the computer. An operating system such as the IBM Personal Computer Series Disk Operating System by Microsoft Corporation (DOS), or the IBM OS/2 operating system software by IBM Corporation, most commonly used with the IBM personal computer family, is loaded into the memory 6 and runs in conjunction with the BIOS stored in ROM 8. It will be understood by those skilled in the art that the personal computer system could be configured so that parts or all of the BIOS are stored in the memory 6 rather than in the ROM 8 so as to allow modifications to the basic system operations by changes made to the BIOS program, which would then be readily loadable into the random access memory 6. Similarly, programs, data, and knowledge representations stored in memory 6 may be stored in ROM 8.

An application program such as a word processing program may also be loaded into the memory 6 to provide instructions to the microprocessor 1 to enable a comprehensive set of word processing tasks, including the creation and revision of text documents, to be performed by the personal computer system shown in FIG. 1. An application program loaded into the memory 6 is said to run in conjunction with the disk operating system previously loaded into the memory 6.

When using a computer such as the IBM Personal Computer for the system shown in FIG. 1, an input device such as a mouse 16 and an adapter may, for example, comprise the MICROSOFT MOUSE. This mouse is available in either a serial version, which plugs into an Asynchronous Communications Adapter available for the IBM Personal Computer, or in a bus version which includes an adapter card which plugs into an accessory slot in the IBM Personal Computer. Mouse 16 is an input device for interacting with the personal computer. Other input devices include keyboards, tablets, touch screens, light pens, joysticks, trackballs, and similar devices.

Personal computer architecture and components are further explained in The Winn Rosch Hardware Bible, W.L. Rosch, Simon & Schuster, ISBN 0-13-160979-3 ("Rosch"), which is specifically incorporated herein by reference.

The present invention relies upon an object-centered constraint approach, which uniquely incorporates object-oriented principles together with constraint-satisfaction techniques.

Key object-oriented principles of identity, classification, polymorphism, and inheritance are incorporated. Identity refers to the organization of data into identifiable conceptual entities called "concepts". Polymorphism means that an operation may operate differently on different concepts. Finally, inheritance refers to concepts inheriting attributes and operations based on a hierarchical relationship. Booch discusses additional aspects of object-oriented analysis and design.

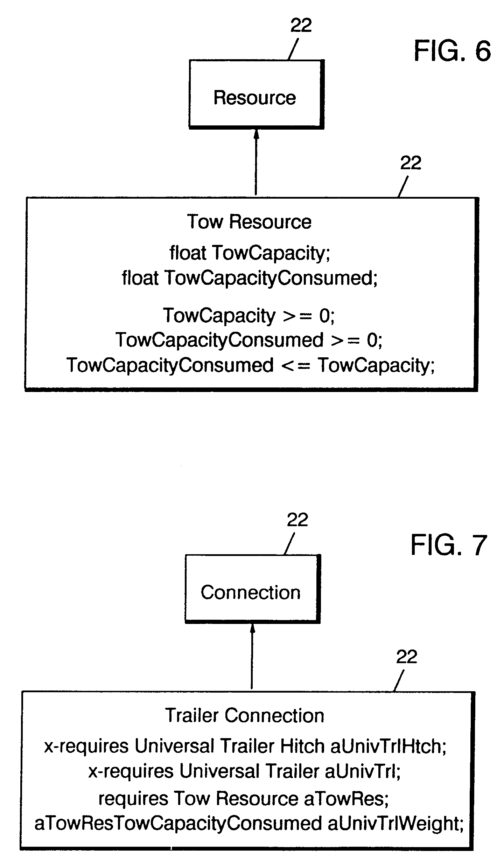

Constraint satisfaction techniques are a method of representing inter- or intra-concept relationships among attributes. Intra-concept attribute constraints represent relationships that constrain the values of attributes that are defined either within the same concept or in any of the concept's inherited properties. Inter-concept attribute constraints represent relationships that constrain the values of attributes that are defined in disjoint concepts (i.e., the attributes are not common to both concepts). In the present invention, constraints are used to define the solution space of possible product configurations. Constraints are typically specified by either a mathematical or a logical statement. In FIG. 6, for example, the constraint "TowCapacityConsumed <= TowCapacity" indicates that total towing capacity consumed must always be less than or equal to total towing capacity.

The present invention represents knowledge by means of entities, properties (which include attributes and constraints), taxonomies (which include hierarchical relationships) and relations. Knowledge representations are manipulated by means of operations such as concept restriction, concept intersection, relation projection, and relation product. Concept restriction extracts specified tuples from a specified concept (i.e., restricts the specified concept to just those tuples that satisfy a specified condition). Concept intersection builds a concept consisting of all tuples appearing in both of two specified concepts. Relation projection extracts specified attributes from a specified relation. Relation product builds a relation from two specified relations consisting of all possible combinations of tuples, one from each of the two relations. General integrity rules prevent the description of impossible states.

A key feature of the present invention is the ability to represent knowledge about items which exist in fact ("existing items") and items which are capable of existing ("feasible items"). Existing items are represented as unit items or as structural aggregations of concepts and properties within the structural taxonomy. These products are typically only products in that the seller wishes to package a number of components in a particular manner. For example, one seller may only sell computers that have hard disks whereas another seller may sell a computer with no hard disk. Both are items yes one seller's item in not necessarily another seller's item. Feasible items are represented with constraints that define the space of feasible, valid concept compositions. For example, a computer may be sold with one hard disk yet have bays that can accommodate more than one hard disk. We may then describe a possible future, feasible item as that same computer with more hard disks or with permutations of hard disks, etc. Until the act of composing the future concept aggregation, the item is just one of a feasible set of possibilities.

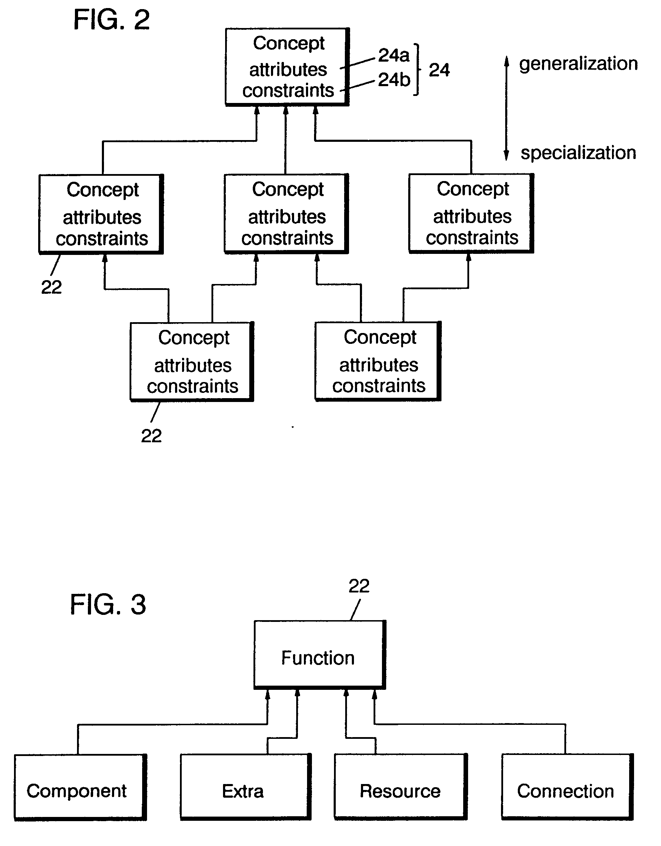

The invented knowledge representation includes a taxonomy 20 of entities 22 and their properties 24. "Taxonomy" means classification and, as used herein, refers to a hierarchical classification system (graphically depicted in Figure 2 as an inverted tree having a root node 20a, terminal nodes 20b, and intervening nodes 20c). Generic entities appear higher in the taxonomy than do specific entities and the taxonomy is therefore referred to as a specialization/generalization hierarchy.

An entity or concept 22 refers to any thing which is to be represented as knowledge. Concepts refer to abstractions and are used to generalize characteristics about other concepts. Concepts are also used to denote specific entities and atomic entities (e.g., number and string).

Information particular to an entity is referred to as a property 24. As used herein, "property" includes both an attribute 24a and a constraint 24b. An attribute is some aspect of an entity and includes both instance attributes and entity attributes. Attributes have values. The value of an instance attribute can be either another abstract or specific concept. The value of a static or variable entity-attribute can be an atomic concept, a set of atomic concepts, or an interval of numeric atomic concepts. If an entity attribute does not change over time, it is called "static". Conversely, an entity attribute which may vary is called "variable". The value of an ancillary entity attribute can be another abstract or specific concept, an atomic concept, a set of atomic concepts, or an interval of numeric atomic concepts.

Static and variable entity-attributes are required to range over the domain of atomic types (i.e., integers, floats, and strings). By default the cardinality of any static or variable entity-attribute is always one. This is because they are in themselves single-valued. A static or variable entity-attribute value can however be assigned to a set of atomic concepts or to an interval of numeric atomic concepts.

A static entity-attribute must be initialized with a constant value and cannot be modified thereafter. Consider a concept Engine with a static entity-attribute called size. Variable entity-attributes need not be initialized and can be modified even once they have been initialized with a value. For example, a variable might be defined that represents the amount of towing capacity for a vehicle that has been consumed as a consequence of a towing a trailer. Lastly, there are ancillary entity-attributes that provide a means of holding meta-knowledge for a concept. An example may be concept documentation (i.e., title). From the three types of entity-attributes only static and variable entity-attributes add semantic information to an entity. Ancillary entity-attributes provide no semantic information to entities.

Instance-attribute declarations allow concepts to be defined as structures of other entities (e.g., as aggregates of other entities). This is done by defining instance-attributes that relate the entity being defined to other entities. An instance- attribute resembles an instance variable in C++. Instance-attribute declarations allow instances of entities to be declared along with an associated cardinality. An instance-attribute in a concept is required to range over the domain of other concepts in the taxonomy. Within a declaration is a qualifier that captures the semantic role of the instance in the concept. This allows instance-attributes to be differentiated based upon their provision or requisition within the entity. For example a Truck concept may provide an instance of a Trailer-hitch concept. In such a case, the instance-attribute could be arbitrarily named as "aHitch" whose value is then restricted to the Trailer-hitch concept. Similarly, an entity may require another concept. As a result of utilizing instance-attributes an entity can be an arbitrarily complex structure of other entities. Aggregation structures are useful in describing the sub-components that comprise a bundle of items.

Associations among concepts can be divided into four general categories:
* single or multiple inheritance relationships
* attribute-entity relationships with quantification and cardinality restrictions including
   - aggregations
   - functional requirements
* constraints on attributes within and among concepts

Binary relationships can be used to define links between abstract concepts that are related in an arbitrary, non-taxonomic manner. Binary relations are used to specify relationships between two entities. There are two types of relations: abstract relations and Cartesian relations. Abstract and Cartesian relations can themselves comprise a specialization taxonomy where one relation serves as a parent to a child relation. The Cartesian relation can be used to implicitly specify all possible relationships between all the entities that are specializations of the two entities in the Cartesian relation definition). In addition, the Cartesian relation can also be used to explicitly specify those entities comprising a particular Cartesian relation. A Cartesian relation must always exist as a child of an abstract relation that was previously defined and can never have a child that is another Cartesian relation. Relationships are useful in describing compatibility between sets of components. Consider two concepts: Vehicle and Bike Rack. due to various dimensions arising from different kinds of vehicles (Jeep or Coupe) not all bike racks are compatible with all vehicles. Consequently, Cartesian relations can be defined which specify which vehicles are compatible with which bike racks. For example, a roof bike rack may only be compatible with a Jeep while a bumper bike rack may only be compatible with a Coupe.

Constraints include both instance attribute and entity attribute constraints. Entity attribute constraints include attribute relations, functional expressions (i.e., mathematical expressions), and logic constraints (i.e., conjunction, disjunction, implication, etc.). Inheritance allows a child concept that is subsumed by one or more parent concept to inherit the parents' properties and relationships.

Inheritance allows for the grouping of entitles with similar properties as an abstract concept in a hierarchy. Consequently, an entity defined as a child of a more abstract concept inherits its properties. This is called single-inheritance. Multiple-inheritance allows for a child entity to inherit properties from multiple parents. The semantics of inheritance are captured in a specialization taxonomy where more general abstract entities are located above more specialized ones. As an example consider an abstract concept Vehicle that can be further specialized as two other concepts: Truck and Car. Both the Truck and the Car are said to inherit from the Vehicle concept. The object-centered constraint approach supports both single and multiple inheritance.

Within an instance-attribute declaration an instance-attribute is defined whose value is restricted to some other entity. Consider the case of the Vehicle concept that provides an instance of an Engine concept where the instance-attribute has been named "aEngine". In other words the value restriction for the attribute-instance, "aEngine", is the Engine concept or any of its specializations in the taxonomy. In the specialization taxonomy any concept that is a child of the Vehicle concept will inherit the aggregation relationship. For example, a Truck is a specialization of Vehicle and therefore also provides an instance of Engine. This inherited attribute-instance declaration has the similar effect of restricting the "aEngine" instance for a Truck to the Engine concept or any of its specializations.

Once an entity value has been defined with an instance-attribute in a parent concept, a child of that parent can further constrain the inherited instance-attribute. This is done by assigning one or more additional concepts to the instance-attribute's value restriction. This has the effect of further restricting the domain of entities which can satisfy the current value restriction. This domain of entities are those entities that are still specializations of the conjoined concepts comprising the instance-attribute value restriction. For example, if the "aEngine" instance-attribute's value restriction is extended to include a Chrysler Engine concept, then the instance-attribute "aEngine" for the Truck concept is restricted to those entities that are specializations of Chrysler engines.

### The Product Modeling Language (PML)

A language has a syntax and a semantics. The syntax of the language is described here. As each construct is presented, the semantics are informally presented. The syntax of a language comprises an alphabet, a vocabulary and a set of grammar rules (specified in appendix I, BNF Specification).

The alphabet of the PML consist the characters listed below:
- alphabet:: 0 1 2 3 4 5 6 7 8 9 a b c d e f g h i j i l m
n o p q r s t u v w x y z A B C D E F G H I J
I L M N O P Q R S T U V W X Y Z Ü # * / + - =
〈 〉 % ( ) { } [ ] , . " ' _ \ :

The vocabulary of a language defines the elements of a language (i.e., those sequential combinations of characters of the alphabet that constitute valid elements of a language. For example, each separate work in this sentence is in the english language vocabulary. Languages, such as PML, recognize certain parts of a language vocabulary as being special constructs in that they can be used as language element delimiters similar to the punctuation found in the english language. If we introduced the keyword "paragraph" into the english language then instead of separating paragraphs by a line we could simply use the keyword "paragraph" to tell us when a paragraph ends and a new one begins. These language elements facilitate context-free grammars that are very efficiently read by programs and allow knowledge descriptions to be compressed, by taking out redundant lines and spaces, before transmission over networks. The vocabulary of PML comprises the following language elements:

| | denotes start of |
|---|---|
| concept | concept declaration |
| const | static entity attribute declaration |
| enum | enumeration declaration |
| string | entity attribute declaration of type string |
| int | entity attribute declaration of type integer |
| float | entity attribute declaration of type float |
| interval | entity attribute declaration of type interval |
| set | entity attribute declaration of type set |
| typedef | start of a user defined declaration |

The following language elements comprise the remainder of the vocabulary:
- identifier: any sequence of alpha numeric characters and the underscore character (_).

The first character of the sequence must be either the underscore character or one of A.z.A.Z.

| | | |
|---|---|---|
| float constant | a floating point number | e.g. 123.987 |
| integer constant | an integer number | e.g. 123 |
| character constant | a character | e.g. c |
| octal constant | an octal number | e.g. 22 |
| hexidecimal constant | a hexidecimal number | e.g. ffff |
| string constant | sequence of characters between inverted commas e.g. "a string" | |

The following are math operators that represent common mathematical functions:
- +: (add)
- -: (subtract)
- /: (divide)
- *: (multiply)
- %: (modulus)
- ∧: (raise to the power of)

The following are short hand representing a common mathematical function with assignment:
- ++: (increment a variable by one)
- --: (decrement a variable by one)
- +=: (addition with assignment)
- --: (subtraction with assignment)
- /=: (division with assignment)
- *=: (multiplication with assignment)
- %=: (modulus with assignment)
- =: (assignment)

The following are relationships representing common mathematical relationships:
- <: (less than)
- >: (greater than)
- <=: (less than or equal to)
- >=: (greater than or equal to)
- ≠: (not equal to)
- =: (equal to)
- subset-of: (subset of)
- element-of: (element of)

The following are logical relationships representing common mathemetical relationships:
- &&: (conjunction)
- ∥: (disjunction)
- ∼: (negation)
- if 0 then 0: (implication)
- if 0 then 0 else 0: (deduction)

The syntax of the language is given in the Appendix as a BNF (Bacus-Naur Format) grammar specification. This specifies the rules that define valid sentences in the Product Modeling Language. If any sentence fails to follow these grammar rules it is invalid. The grammar rules are used by programs, called Parsers that validate sentence grammars and generate errors when violations are encountered.

comments: /* starts and */ terminates or // starts and \n terminates.

Punctuation are characters used to make the language more readible. They serve as delimiters in the language similar to punctuation in the English language.
- punctuation:: white space, comma, braces, brackets, and parenthesis.
- syntax:: concepts, attributes (instances, const, var, ancillary), constraints

The structural taxonomy enables the description of entities (such as products) in terms of the functional aspects of the product they implement. This has been accomplished through the clear separation of functional and product specific information are separated. As a result of this separation the taxonomy is divided into two constituent taxonomies. The two constituents representing the functional and product-specific information.

The functional taxonomy provides for vendor/manufacturer independent product representation. The vendor/manufacturer independent nature of the functional taxonomy utilizes a standard nomenclature and functional decomposition. The functional taxonomy provides the basis from which to generate the product-specific taxonomy. Products are described in terms of their Function. It provides for vendor/manufacturer independent product representation. The Functional aspect of the taxonomy can be further classified into the following: Product Functions, Connectivity Functions, Resource Functions, and Spacial Functions. In the PC industry, Product Functions describe the hardware and software computer functions. connectivity functions serve to represent the functional dependencies that exist between components. They specify the functional components that are both provided and required for a certain type of connection to exist. In addition, they define the physical and logical connection constraints that must be satisfied when connecting components. Resource functions are provide by product functions and represent entities that can be partially consumed by other product functions (i.e., storage space on a hard disk can be consumed by software installed on that hard disk). Spatial functions refer to space in a product that is wholly consumed by other products (i.e., a storage bay in a PC is entirely consumed if it is filled with a storage device). Ease of maintenance is achieved by clearly separating Functional, Physical, Spatial, Abstract and Product Specific descriptions in addition to its taxonomic structure. The taxonomic structure provides modularity and promotes more localized updating and revision. The inheritance association feature has the effect of eliminating data redundancies typically found in other data structures (i.e., the relation in the relational model). Elimination of this redundancy significantly reduces the effort involved in the maintenance task.

Previous approaches embed functional dependency information in a functional hierarchy: this has the effect of tightly coupling one object to another. The present invention uses connectivity functions to separate functional dependency information from being embedded in the taxonomy. This provided for a greater degree of flexibility (e.g., a customer interested in ordering a single component of a product is not concerned with the functional dependencies that component may have with other components). This separation also facilitates easier functional-dependency maintenance.

The product specific taxonomy allows vendors/manufacturers to describe their own product components and as well as the contents of bundled systems based on any number of strategies (i.e., marketing, inventory reduction, etc.). This aspect facilitates vendors/manufacturers in the building, customizing, and maintaining of their own product descriptions. The description of products in terms of their Product Specific allows vendors/manufacturers to describe their own product components as well as the contents of bundled systems based on any number of strategies (i.e., marketing, inventory reduction, etc.). This aspect enables vendors/manufacturers to build, customize, and maintain their own product descriptions. The consistency of product representations across vendors/manufacturers is ensured through the intimate connection of the Product Specific description to the Functional description. This connection ensures that the Product Specific description is ultimately functionally defined.

Although the functional and product specific taxonomies have been discussed separately, the two are closely related. The actual products (components as well as bundled systems) in the product- specific taxonomy are functionally described with the concepts defined in the functional taxonomy. Use of the functional taxonomy helps ensure the consistency and completeness of the product descriptions.

The ease of maintenance is a benefit resulting from taxonomic structure in addition to the separation between the functional and product-specific aspects. Separation into two taxonomies provides modularity promoting more localized updating and revision. The inheritance of the taxonomic structure has the effect of eliminating data redundancies typically found in other data structures (i.e., the relation in the relational model). Elimination of this redundancy significantly reduces the effort involved in the maintenance task.

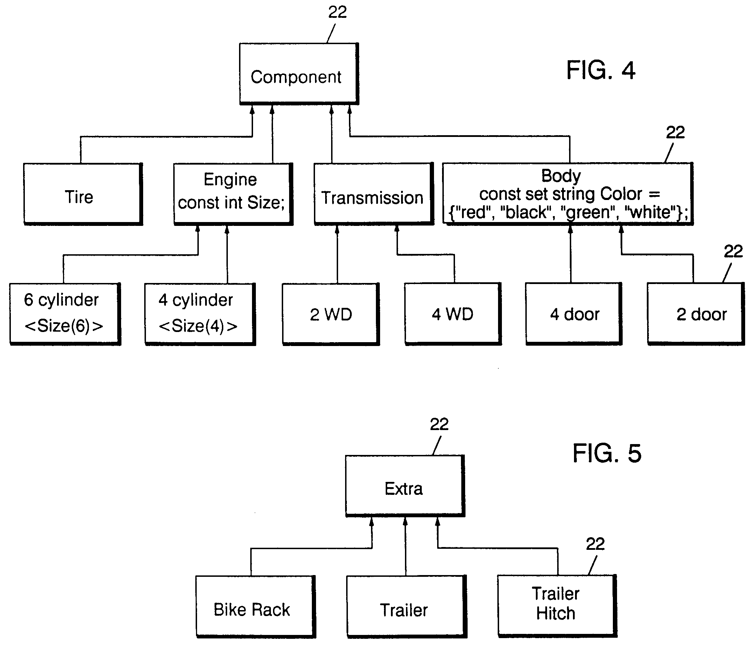

As shown in FIG. 3, the functional taxonomy has a root node labeled "Function". It is a decomposition of the functions comprising a product where each of the functions corresponds to a concept. FIGs. 3 - 4 illustrate a functional taxonomy for a vehicle. In the taxonomy, the vehicle is decomposed into a Component concept, which in turn is decomposed into four other concepts: Tire, Engine, Transmission, and Body. The Engine concept is further decomposed into a 6 cylinder concept and 4 cylinder concept. The Transmission concept is decomposed into a 2WD concept and a 4WD concept. The Body concept is comprised of a 4 door concept and a 2 door concept.

The decomposition illustrates the inheritance association. For example, a 2WD IS-A Transmission, 4WD IS-A Transmission, and a Transmission IS-A Function. This is specified as follows:

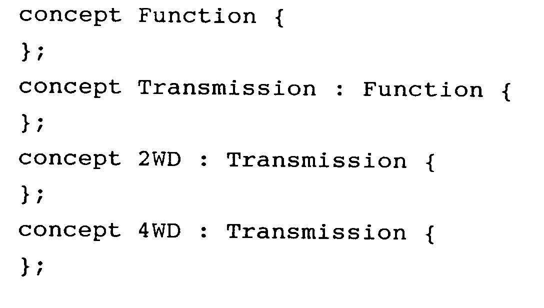

The concept Engine includes in its definition an attribute definition for size. All attributes are designated with the const qualifier, meaning that the attribute's value is constant and cannot be altered. Following the const qualifier is the attribute type (i.e., int (integer number), float (real number), string (string of characters)). The act of assigning an attribute a value is called initialization. An attribute can be initialized immediately in its declaration or in a concept that inherited the attribute. The language statements below show how the attribute size is defined in the Engine concept and how the attribute is initialized in the 4 cylinder and 6 cylinder concepts with the values of 4 and 6, respectively.

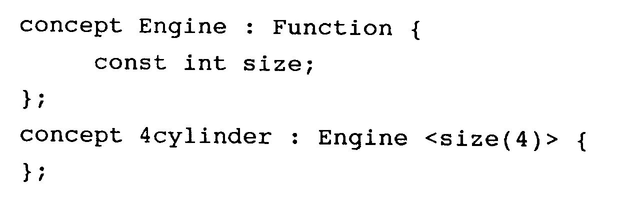

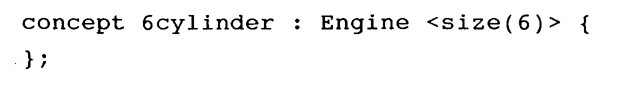

Attribute values can also be restricted to a range of values specified in a set or an interval. This requires an additional qualifier placed after the const qualifier (i.e., interval or set). Notice that the Body concept has in its definition the attribute color. The color attribute is restricted to range over a set of string values. The attribute is immediately initialized with a set of values as is shown. The corresponding PML is shown below.

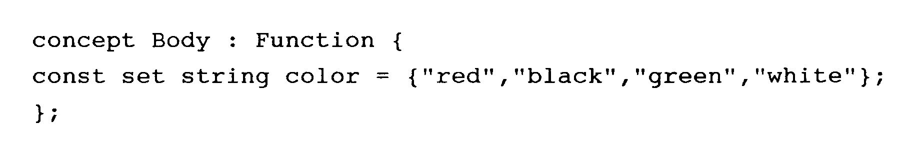

### Product-specific taxonomy

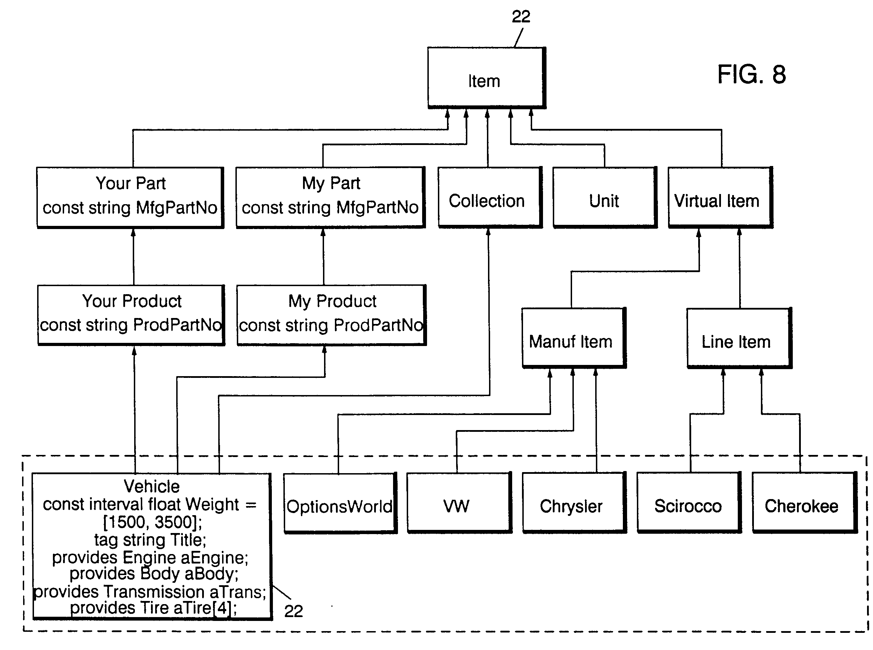

The product-specific taxonomy has a root labeled item. FIG. 8 shows the upper portion of a product-specific taxonomy for two types of vehicles. Specializations of the Item concept shows the concepts Your part, Your Product, My Part, My Product, Collection, Unit, Virtual Item, Manuf Item, and Line Item. Each of these concepts adds to the description of a product. Your Part and My Part allows for existence of two perspectives on items. For example, a vendor or dealer selling a bundle obtained from a manufacturer would consider the bundle both My Product and Your Product. The vendor, however, may or may not sell the contents of a bundle as individual products. Consequently, such an item when not sold by the vendor is labeled Your Part. Conversely, such an item when sold by the vendor is labeled My Product. Also notice from the inheritance association that all products are parts and only some parts are products. The Collection and Unit concepts allow products to be defined as items that either provide other items or not, respectively. Virtual item describes items which are abstractions. They include Line Item for representing product lines and Manuf Item for representing different manufacturers. The description of universal product attributes are contained in the Abstraction component. This serves to capture attributes that are commonly used to describe other concepts in the Functional or Product Specific description. Vendors/manufacturers would use abstraction concepts to describe concepts (products) in their part of the product description, the Product Specific description (i.e., a particular vendors/manufacturers product may have a product line abstraction). In a similar manner, the organization responsible for maintaining the Functional description may also use abstractions.

The shaded portion of FIG. 8 contains those concepts that are dependent on the particular domain being modeled. For example VW and Chrysler concepts are Manuf Items appropriate to the vehicle domain. However, for the personal computer domain the concepts might be replaced by IBM and Compaq concepts. Line Item is specialized into the Cherokee and Scirocco concepts. Note that the Vehicle concept contains in its definition declarations for an attribute, a tag, and several aggregation (provides) relationships. the attribute weight is designated to range over an interval of real numbers ranging from 1500 to 3500. A tag called title is defined to be of type string. There are four provides relationships. Following the provides keyword is an instance name (i.e., aEngine). Immediately thereafter is an optional cardinality restriction. Cardinality restrictions can be defined in terms of a maximum and a minimum (i.e., atleast and atmost). In the figure a Vehicle provides exactly one aEngine instance. If no cardinality restriction has been stated the default cardinality restriction of atleast zero and atmost infinity is used. Lastly, following the cardinality restriction is the value restriction for the instance. For the instance aEngine the concept Engine forms the value restriction. The engine provides relationship essentially states that every vehicle derived off the vehicle concept must have exactly one instance of engine where that instance must be a chile of the Engine concept. The PML associated with the Vehicle concept is as follows:

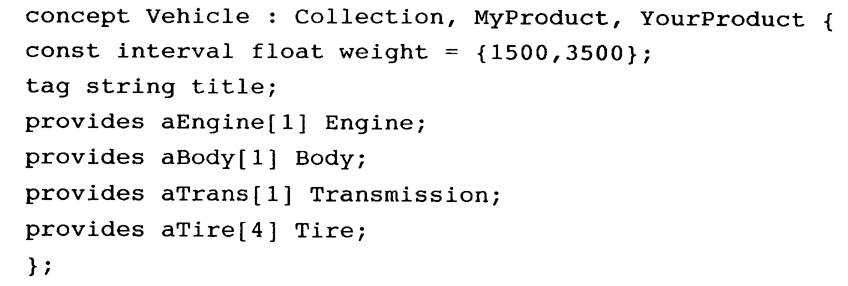

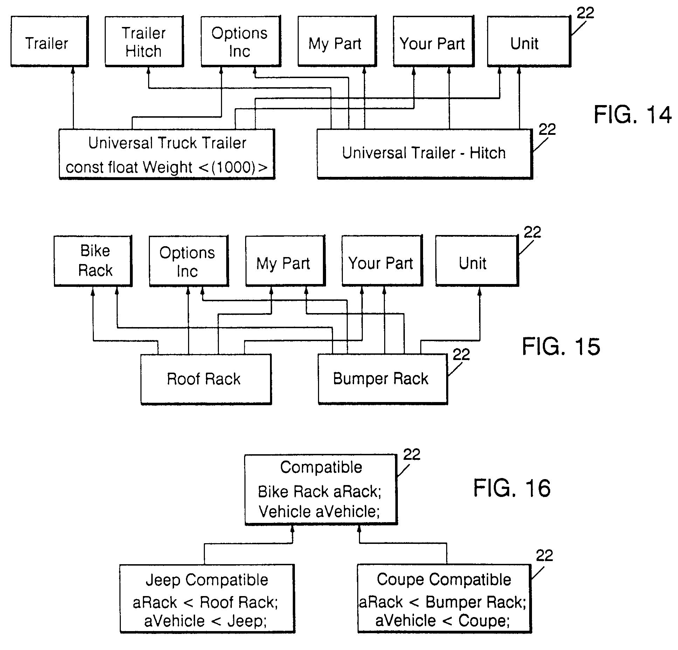

Feasible products are described using relation concepts and constraints. The Compatible relation in FIG. 16 represents a relationship between vehicles and bike racks that are compatible with those vehicles. This relation is specialized into a Jeep Compatible relation and a Coupe Compatible relation. The instance-attribute constraints in the Jeep Compatible relation shows that roof rack concepts are compatible with Jeep vehicles and the instance-attribute constraints in the Coupe Compatible relation shows bumper racks are compatible with Coupe vehicles. This defines the feasible space of possible bike rack / vehicle combinations.

Two additional parts of the model shown in FIG. 7 and FIG. 6 represent the feasible space of concept combinations with respect to the feasible combinations of vehicles and trailers. This feasible space is described by using constraint to describe the number of trailer hitch connections available and the tow capacity of a vehicle respectively. The Trailer Connection is a Connection and has three instance attributes stating that a trailer connection exclusively requires a Universal Trailer Hitch, a Universal Trailer and a Tow resource. The Trailer Connection concept also has an entity-attribute constraint stating that the Tow Capacity Consumed in the Tow Resource variable entity-attribute in the Tow Resource concept, FIG. 6, must be increased by the weight of the Universal Trailer.

The Tow Resource concept is-a Resource and contains a number of variable entity-attributes and entity-attribute constraints. The Tow Resource has a variable showing the TowCapacity and the amount of that tow capacity that is consumed by some tow entity. The concept, furthermore, represents the constraints on the row resource with entity-attribute constraints showing that the TowCapacity and the TowCapacityConsumed must be greater than zero, and that the TowCapacityConsumed must be less than or equal to the TowCapacity.

These elements of a model describe the feasible vehicles-trailer combinations. The model will prevents infeasible aggregates such as a vehicle having two trailers and a vehicle with a trailer that is too heavy for it to pull.

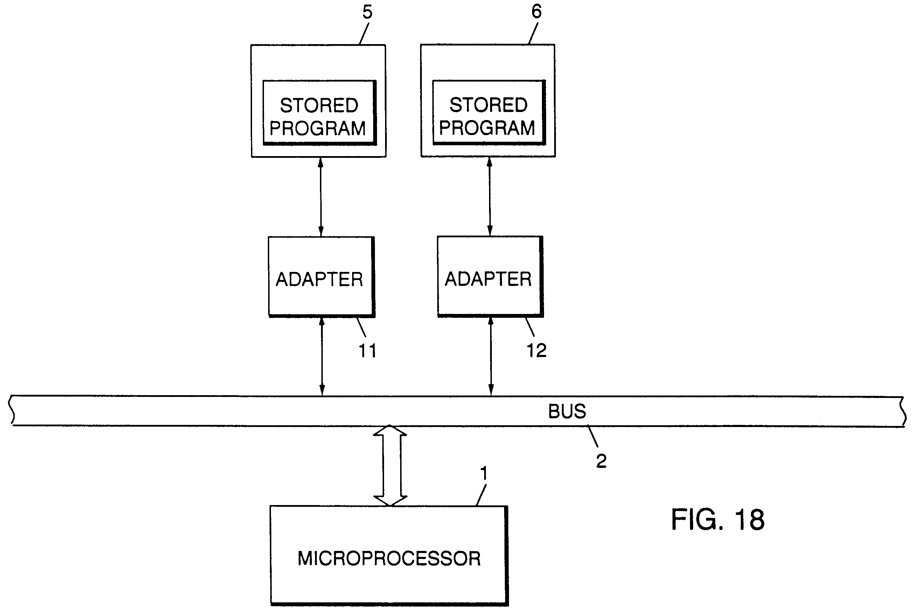

As shown in FIG. 18, a stored program 20 implementing the method is advantageously embodied as an article of manufacture by embedding the stored program onto diskette 5, or other portable storage media. Further, the stored program 20 is embodied as a special purpose apparatus by storing the program's executable instructions in memory 6, ROM 8, or a combination of both, for execution by microprocessor 1.

Of course, many modifications and adaptations to the present invention could be made to advantage without departing from the spirit of this invention. Further some features of the present invention could be used without corresponding use of other features. Accordingly, this description should be considered as merely illustrative of the principles of the present invention and not in limitation thereof.

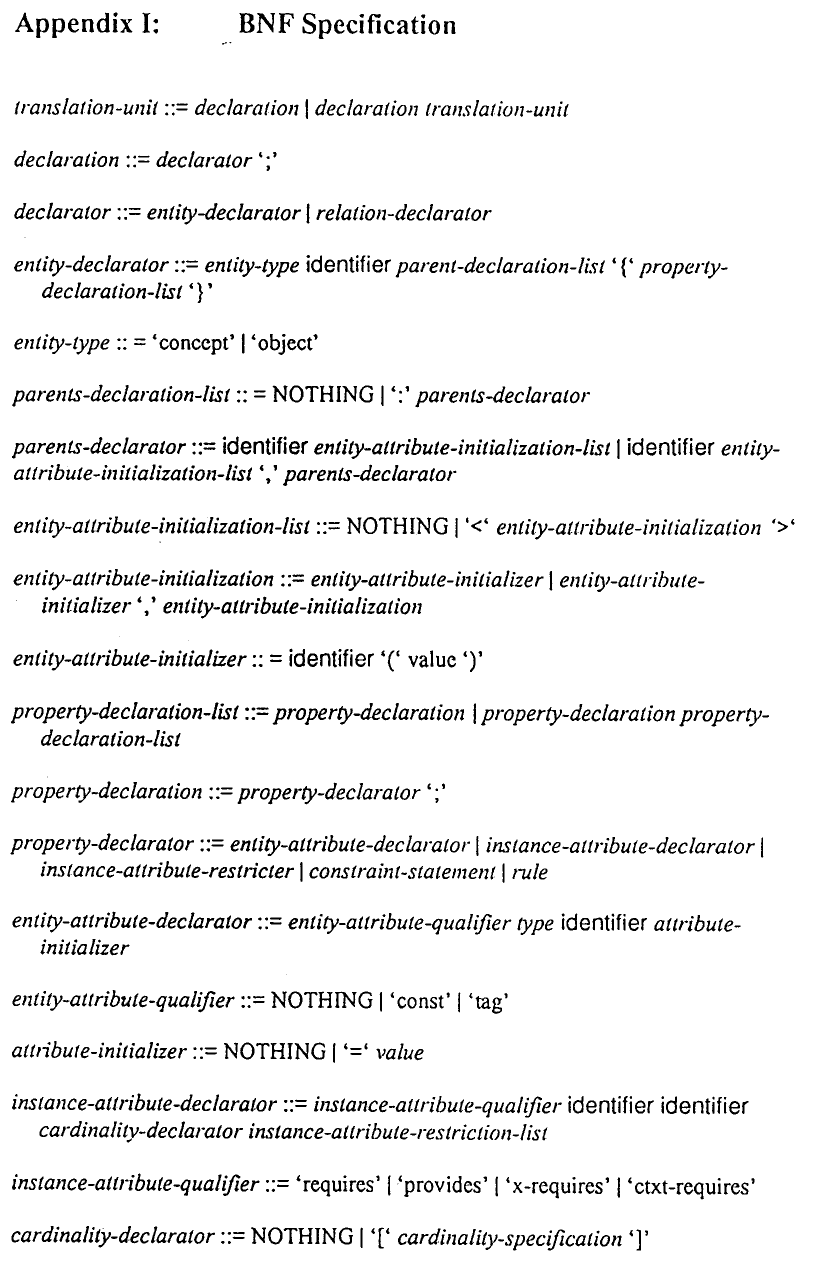

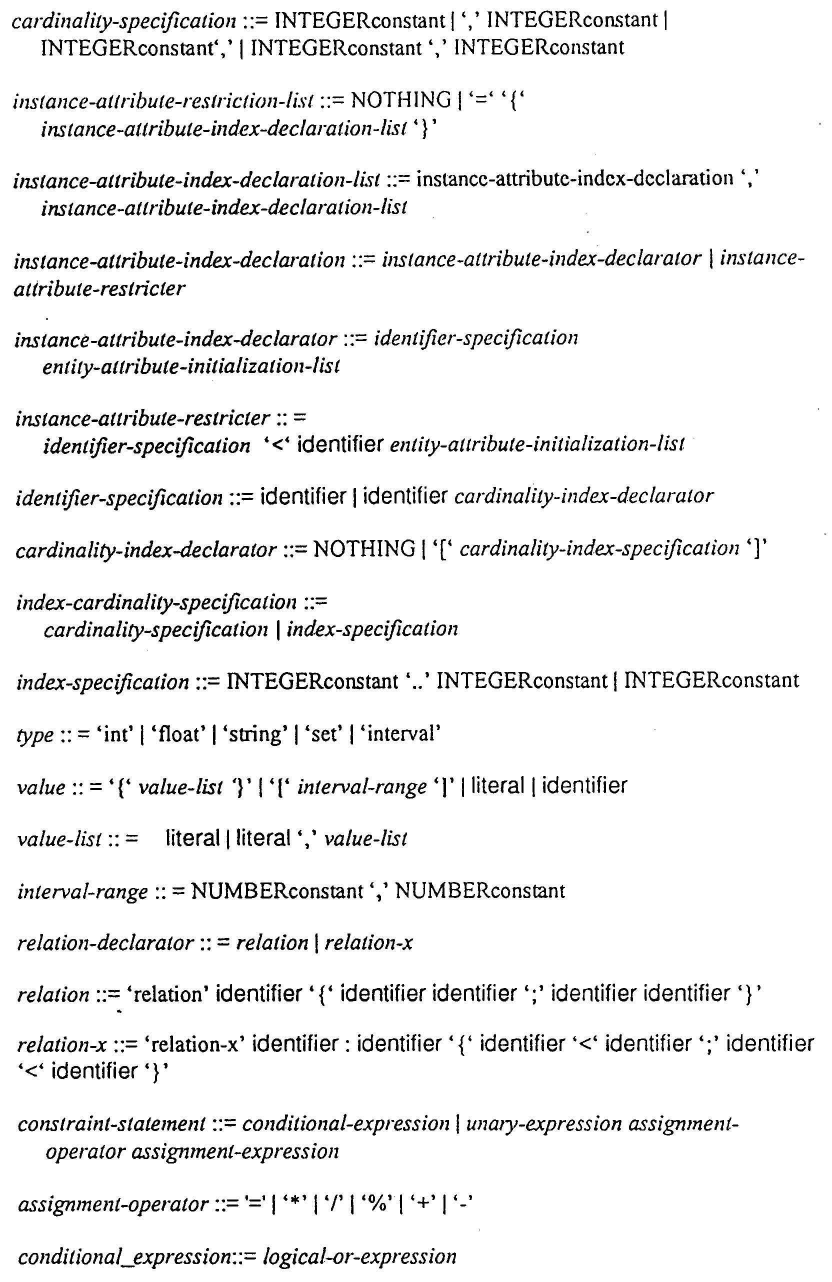

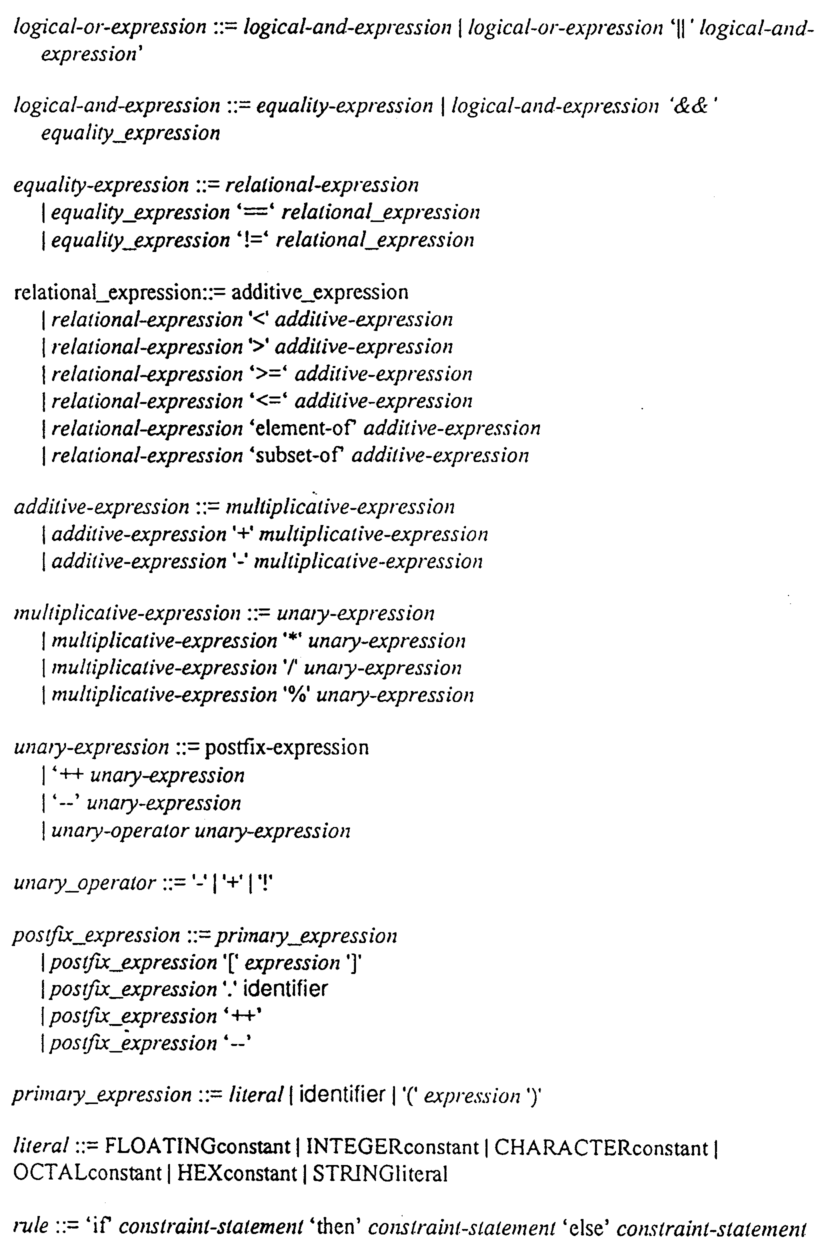

## Claims

1. A method for representing knowledge about entities, comprising the steps of:
defining a functional taxonomy which comprises at least one entity and at least one property associated with each entity;
defining a structural taxonomy which comprises at least one entity and at least one property associated with each entity, wherein at least one structural taxonomy entity is defined in terms of at least one functional taxonomy entity; and
storing at least a portion of said functional taxonomy and at least a portion of said structural taxonomy within a memory.

2. The knowledge representation method of claim 1, wherein the defining of said functional and/or said structural taxonomy further comprises the step of organizing said functional and/or said structural taxonomy according to a specialization/generalization hierarchy, wherein each entity in said hierarchy, except for a root entity, directly or indirectly inherits at least one property from at least one predecessor entity in said hierarchy.

3. The knowledge representation method of claim 1, wherein the defining of said functional and/or said structural taxonomy further comprises the step of encapsulating said at least one property associated with each entity together with the entity.

4. The knowledge representation method of claim 1, wherein the defining of said functional and/or said structural taxonomy further comprises the step of defining at least one property to be at least one constraint.

5. The knowledge representation method of claim 1, wherein each entity represents a functional and/or said structural aspect of goods or of services.

6. A system for representing knowledge about entities, comprising:
at least one computer having access to memory;
means for defining a functional taxonomy which comprises at least one entity and at least one property associated with each entity;
means for defining a structural taxonomy which comprises at least one entity and at least one property associated with each entity, wherein at least one structural taxonomy entity is defined in terms of at least one functional taxonomy entity; and
means for storing at least a portion of said functional taxonomy and at least a portion of said structural taxonomy within said memory for access by said at least one computer.

7. The knowledge representation system of claim 6, wherein means for defining said functional and/or said structural taxonomy further comprises means for organizing said functional and/or said structural taxonomy according to a specialization/generalization hierarchy, wherein each entity in said hierarchy, except for a root entity, directly or indirectly inherits at least one property from at least one predecessor entity in said hierarchy.

8. The knowledge representation system of claim 6, wherein means for defining said functional and/or said structural taxonomy further comprises means for encapsulating said at least one property associated with each entity together with the entity.

9. The knowledge representation system of claim 6, wherein means for defining said functional and/or said structural taxonomy further comprises means for defining at least one property to be at least one constraint.

10. The knowledge representation system of claim 6, wherein each entity represents a functional and/or said structural aspect of goods or of services.

11. A memory for storing data for access by a computer program being executed on a computer, comprising:
means for defining a functional taxonomy which comprises at least one entity and at least one property associated with each entity; and
means for defining a structural taxonomy which comprises at least one entity and at least one property associated with each entity, wherein at least one structural taxonomy entity is defined in terms of at least one functional taxonomy entity.

12. The knowledge representation system of claim 11, wherein means for defining said functional and/or said structural taxonomy further comprises means for organizing said functional and/or said structural taxonomy according to a specialization/generalization hierarchy, wherein each entity in said hierarchy, except for a root entity, directly or indirectly inherits at least one property from at least one predecessor entity in said hierarchy.

13. The knowledge representation system of claim 11, wherein means for defining said functional and/or said structural taxonomy further comprises means for encapsulating said at least one property associated with each entity together with the entity.

14. The knowledge representation system of claim 11, wherein means for defining said functional and/or said structural taxonomy further comprises means for defining at least one property to be at least one constraint.

15. The knowledge representation system of claim 11, wherein each entity represents a functional and/or said structural aspect of goods or of services.

16. A computer program product having a computer readable medium having computer program logic recorded thereon for representing knowledge about entities, said computer program product comprising:
means for defining a functional taxonomy which comprises at least one entity and at least one property associated with each entity; and
means for defining a structural taxonomy which comprises at least one entity and at least one property associated with each entity, wherein at least one structural taxonomy entity is defined in terms of at least one functional taxonomy entity.

17. The knowledge representation system of claim 16, wherein means for defining said functional and/or said structural taxonomy further comprises means for organizing said functional and/or said structural taxonomy according to a specialization/generalization hierarchy, wherein each entity in said hierarchy, except for a root entity, directly or indirectly inherits at least one property from at least one predecessor entity in said hierarchy.

18. The knowledge representation system of claim 16, wherein means for defining said functional and/or said structural taxonomy further comprises means for encapsulating said at least one property associated with each entity together with the entity.

19. The knowledge representation system of claim 16, wherein means for defining said functional and/or said structural taxonomy further comprises means for defining at least one property to be at least one constraint.

20. The knowledge representation system of claim 16, wherein each entity represents a functional aspect of goods or of services.
